(19) Europäisches Patentamt

European Patent Office

Office européen des brevets

(11) **EP 1 640 485 A2**

(12) **EUROPÄISCHE PATENTANMELDUNG**

(43) Veröffentlichungstag:
29.03.2006 Patentblatt 2006/13

(51) Int Cl.:
*D02H 13/14* (2006.01)    *D02H 13/26* (2006.01)

(21) Anmeldenummer: 05020827.1

(22) Anmeldetag: 23.09.2005

(84) Benannte Vertragsstaaten:
AT BE BG CH CY CZ DE DK EE ES FI FR GB GR
HU IE IS IT LI LT LU LV MC NL PL PT RO SE SI
SK TR
Benannte Erstreckungsstaaten:
AL BA HR MK YU

(30) Priorität: 28.09.2004   DE 102004046998

(71) Anmelder: PROTECHNA Herbst GmbH & Co. KG
85521 Ottobrunn (DE)

(72) Erfinder:
• Graf, Norbert
  85457 Wörth (DE)
• Bongratz, Rainer, Dr.
  83620 Feldkirchen-Westerham (DE)

(74) Vertreter: Thum, Bernhard
Wuesthoff & Wuesthoff,
Schweigerstrasse 2
81541 München (DE)

(54) **Vorrichtung zum Erfassen der Fadenspannung wenigstens eines Einzelfadens einer Fadenschar in der Textilverarbeitung**

(57)    Die Erfindung betrifft eine Vorrichtung (10) zum Erfassen der Fadenspannung wenigstens eines Einzelfadens (f) einer Fadenschar (F) in der Textilverarbeitung, wobei die Fadenschar (F) eine Mehrzahl von im Wesentlichen parallel zueinander geführten Einzelfäden (f1, f2, ...fn) aufweist, wobei die Vorrichtung (10) einen Messschlitten (12) aufweist, der quer zur Fadenschar (F) in einer messaktiven Bewegungsrichtung ($20_1$) bewegbar ist, wobei weiter der Messschlitten (12) einen Messtaster (66) aufweist, der bei der Bewegung des Messschlittens (12) in der messaktiven Bewegungsrichtung ($20_1$) mit dem wenigstens einem Einzelfaden (f) zur Bestimmung der Fadenspannung in Wechselwirkung tritt und nach Maßgabe der Wechselwirkung ein Sensorsignal erzeugt. Bei der erfindungsgemäßen Vorrichtung ist ferner vorgesehen, dass der Messtaster (66) ein Auslenkungsprofil aufweist, das an dem wenigstens einen Einzelfaden zur Bestimmung der Fadenspannung angreift, wobei die Vorrichtung den zeitlichen Verlauf des Sensorsignals erfasst und anhand des zeitlichen Verlaufs des Sensorsignals unter Berücksichtigung der Geometrie des Auslenkungsprofils die Fadenspannung des wenigstens einen Einzelfadens bestimmt.

Fig. 1

**Beschreibung**

Die vorliegende Erfindung betrifft eine Vorrichtung zum Erfassen der Fadenspannung wenigstens eines Einzelfadens einer Fadenschar in der Textilverarbeitung, wobei die Fadenschar eine Mehrzahl von im Wesentlichen parallel zueinander geführten Einzelfäden aufweist, wobei weiter die Vorrichtung einen Messschlitten aufweist, der quer zur Fadenschar in einer messaktiven Bewegungsrichtung bewegbar ist, und wobei der Messschlitten einen Messtaster aufweist, der bei der Bewegung des Messschlittens in der messaktiven Bewegungsrichtung mit dem wenigstens einen Einzelfaden zur Bestimmung der Fadenspannung in Wechselwirkung tritt.

Bei der Herstellung textiler Flächengebilde kommen oftmals Fadenscharen zum Einsatz. Dabei ist es aus Qualitätsgründen in der Regel erforderlich, dass die Einzelfäden der Fadenschar im Wesentlichen dieselbe Fadenspannung aufweisen. Andernfalls kommt es zu sichtbaren Störstellen im textilen Flächengebilde, was letztendlich zu qualitativ minderwertiger Ware oder Ausschussware führt. Dies macht eine Überwachung der Fadenspannung erforderlich, wobei man üblicherweise nicht daran interessiert ist, den Spannungsverlauf mit hoher zeitlicher Auflösung, im Millisekundenbereich, zu erfassen, da nur der längerfristige Trend für das textile Ergebnis relevant ist.

Zur Überwachung der Fadenspannung der Einzelfäden einer Fadenschar stehen im Stand der Technik lediglich begrenzte Möglichkeiten zur Verfügung. In der klassischen Textilverarbeitung wurde die Fadenspannung manuell dadurch überprüft, dass eine Bedienungsperson mit ihrem Daumen quer über die Fadenschar strich. Diese rein subjektive Messung der Fadenspannung führt jedoch zu unzureichenden Ergebnissen. Alternativ ist es auch möglich, manuell jeden einzelnen Faden mittels einer mechanischen Spannungsmessvorrichtung hinsichtlich seiner Fadenspannung zu messen. Dies ist jedoch enorm zeit- und kostenintensiv und lässt sich bei einer sich bewegenden Fadenschar mit einer großen Anzahl von Einzelfäden nicht wirtschaftlich realisieren.

Zur maschinellen Erfassung von Fadenspannungen ist im Stand der Technik aus der DE 195 46 473 A1 eine Vorrichtung der gattungsgemäßen Art bekannt. Bei dieser Vorrichtung ist der Messschlitten derart ausgebildet, dass er die Fadenspannungen von Einzelfäden nacheinander erfasst und nach Maßgabe der erfassten Fadenspannungen Wickelvorrichtungen für Fadenscharen ansteuert. Es hat sich in der Praxis jedoch gezeigt, dass der Messschlitten gemäß diesem Stand der Technik eine verhältnismäßig hohe Belastung auf den Einzelfaden ausübt. Diese kann zu unerwünschten Zerstörungen von Einzelfäden der Fadenschar führen und die Fadenspannung im Augenblick der Messung verfälschen. Dies liegt insbesondere daran, dass bei der in diesem Stand der Technik beschriebenen bevorzugten Ausführungsform jeder Einzelfaden einzeln mittels eines nadelartigen Messkopfes vermessen wird, der selbst gegen Beschädigung verhältnismäßig empfindlich ist. Dabei muss der Einzelfaden an dem Messkopf entlang gleiten wodurch verhältnismäßig hohe Querkräfte auftreten. Im Anschluss daran muss der Einzelfaden den Scheitel des Messkopfes überschreiten, wobei der Messkopf ausgelenkt wird, und wieder an dem Messkopf abgleiten. Bei der Messung handelt es sich um eine Augenblicksmessung, die die aktuelle Spannung des jeweils vermessen Einzelfadens wiedergibt. Es hat sich gezeigt, dass bei der bekannten Vorrichtung verhältnismäßig große Ungenauigkeiten der Messergebnisse auftreten. Ein weiterer Nachteil liegt darin, dass der Messkopf auf die Teilung eines Riets, das die Fadenschar ausrichtet, abgestimmt werden muss. Der Stand der Technik gemäß DE 195 46 473 A1 erwähnt zwar auch die Möglichkeit, Fadengruppen hinsichtlich der Fadenspannung zu vermessen, gibt jedoch bezüglich der tatsächlichen geometrischen Verhältnisse am Messkopf dieser Ausführungsform sowie der Vorgehensweise bei der Auswertung der Messsignale keine weiterführenden Informationen.

Es ist demgegenüber eine Aufgabe der vorliegenden Erfindung, eine Vorrichtung der eingangs bezeichneten Art bereitzustellen, die bei einfachem Aufbau eine zuverlässige Erfassung von Fadenspannungen unabhängig von der Fadenart, Fadenabstand und anderen Prozessparametern mit hinreichend hoher Genauigkeit zulässt.

Diese Aufgabe wird durch eine Vorrichtung der eingangs bezeichneten Art gelöst, bei der der Messtaster ein Auslenkungsprofil aufweist, das an dem wenigstens einen Einzelfaden zur Bestimmung der Fadenspannung angreift, wobei die Vorrichtung den zeitlichen Verlauf des Sensorsignals erfasst und anhand des zeitlichen Verlaufs des Sensorsignals unter Berücksichtigung der Geometrie des Auslenkungsprofils die Fadenspannung des wenigstens einen Einzelfadens bestimmt.

Erfindungsgemäß wird der wenigstens eine Einzelfaden durch das Auslenkungsprofil nach Maßgabe dessen Geometrie definiert ausgelenkt, wobei in Abhängigkeit von der Auslenkung der Einzelfaden eine bestimmte durch die Fadenspannung bedingte Kraft auf den Messtaster ausübt. Diese Kraft und damit die Fadenspannung spiegeln sich in dem Sensorsignal wieder. Bei bekannter Geometrie des Auslenkungsprofils lässt sich anhand des zeitlichen Verlaufs des Sensorsignals auf die Fadenspannung schließen. Dies gilt auch dann, wenn mit dem Auslenkungsprofil in dem beobachteten Zeitraum mehrere Einzelfäden gleichseitig zusammenwirken. Durch die Beobachtungen des Sensorsignals über einen längeren Zeitraum, wobei eine Mehrzahl von Messwerten zur Ermittlung der Fadenspannung des Einzelfadens berücksichtigt wird, können Probleme, wie sie beim Stand der Technik aufgrund der durchgeführten Augenblicksmessungen auftreten, vermieden werden. Die Auswertung des zeitlichen Verlaufs des Sensorsignals erlaubt eine genauere Bestimmung der Fadenspannung der jeweiligen Einzelfäden, wenn auch dadurch der Mess- und Auswerteaufwand zunimmt.

Um aus der auf den Messtaster ausgeübten Kraft oder Kraftänderung die Fadenspannung berechnen zu können, sollte der Faden in einer definierten Geometrie durch den Messtaster ausgelenkt werden. So spannt in idealisierter Sicht der Auflagepunkt jedes am Messtaster aufliegenden Einzelfadens mit den beiden nächstgelegenen Auflagepunkten des jeweiligen Einzelfadens an Führungselementen ein Dreieck auf, dessen Seitenverhältnis in die Berechnung eingeht. Gemäß einer Weiterbildung der Erfindung ist in diesem Zusammenhang wenigstens eine mit dem Messschlitten verbundene Führungskufe vorgesehen, die den wenigstens einen Einzelfaden auf einer Seite des Messtasters in eine vorbestimmte Lage bezüglich des Messtasters bringt, vorzugsweise den wenigstens einen Einzelfaden auf einer Seite des Messtasters um einen vorbestimmten Abstand aus einer von den Einzelfäden der Fadenschar definierten Ebene auslenkt. Dadurch lässt sich der jeweils zu vermessende Einzelfaden gegenüber dem Messtaster in eine vorbestimmte Lage bringen, so dass äußere Einflüsse, die das Messergebnis hinsichtlich der Fadenspannung verfälschen können, beispielsweise Unterschiede im Niveau der Einzelfäden der Fadenschar, eliminiert werden können. Aus dem Stand der Technik ist es nämlich bekannt, die Fadenschar über einen Überlaufstab zu führen. Da üblicherweise eine große Zahl (100 bis 2000) Fäden auf dem Überlaufstab geführt werden, kommt es wegen der kumulierten Fadenspannung zur Durchbiegung unter der Last der umgelenkten Fäden. Auch das Gewicht weiterer auf den Überlaufstab einwirkender Komponenten verübt ein weiteres Biegemoment auf diesen. Durch diese Verformung besitzen die Einzelfäden der Fadenschar in Abhängigkeit von ihrer Position auf dem Überlaufstab unterschiedliche Verläufe, was eine Spannungsmessung, insbesondere einen Vergleich zwischen Fadenspannungen verschiedener Einzelfäden, erschwert.

Um auch ein sanftes Auflaufen der Einzelfäden der Fadenschar auf die Führungskufe zu ermöglichen, sieht eine Weiterbildung der Erfindung vor, dass die wenigstens eine Führungskufe relativ zu einer von der Fadenschar aufgespannten Ebene derart geneigt ist, dass bei einer Bewegung des Messschlittens in der messaktiven Bewegungsrichtung der wenigstens eine Einzelfaden der Fadenschar unter die Führungskufe gleitet und mit dieser in Wechselwirkung tritt. Mit anderen Worten ist die Führungskufe im Stile einer schiefen Ebene ausgebildet, auf die die Einzelfäden der Fadenschar bei einer Bewegung des Messschlittens in der messaktiven Bewegungsrichtung nacheinander auflaufen.

Eine vorteilhafte Weiterbildung der Erfindung sieht in diesem Zusammenhang ein Führungskufenpaar vor, dessen Führungskufen beidseits des Messtasters angeordnet sind und den wenigstens einen Einzelfaden beidseits des Messtasters in eine vorbestimmte Lage bezüglich des Messtasters bringen, vorzugsweise den wenigstens einen Einzelfaden beidseits des Messtasters um einen vorbestimmten Abstand aus einer von den Einzelfäden der Fadenschar definierten Ebene auslenken. Durch diese Maßnahme lassen sich die Einzelfäden der Fadenschar beidseits des Messtasters in vorbestimmte Lagen bringen, so dass die Vergleichbarkeit der Messungen der Einzelfäden verbessert wird. Dadurch lässt sich ein Verlauf von Einzelfäden erreichen, der von äußeren Einflüssen, beispielsweise einer Durchbiegung eines Überlaufstab im Wesentlichen unabhängig ist. Beide Führungskufen sind so ausgelegt, dass der Faden zunächst sanft, das heißt in kleinem Winkel, auf die Führungskufen aufläuft und danach auf das Auslenkungsprofil des Messtasters. Position und Profil der Führungskufen legen den Punkt fest, an dem eine auflaufender Einzelfaden erstmals das Auslenkungsprofil des Messtasters berührt.

Eine Weiterbildung der Erfindung sieht vor, dass der Messtaster eine bezüglich der messaktiven Bewegungsrichtung vorlaufende Tastflanke mit einer Tastflankensteigung und eine bezüglich der messaktiven Bewegungsrichtung nachlaufende Abwurfflanke mit einer Abwurfflankensteigung aufweist, wobei die Steigung der Abwurfflanke vorteilhaft so gewählt wird, dass der Faden dort keine Kraft mehr auf den Sensor ausübt. Durch eine derartige Gestaltung des Messtasters läuft ein Einzelfaden bei einer Bewegung des Messschlittens in der messaktiven Bewegungsrichtung sanft auf die Tastflanke des Auslenkungsprofils auf und erhöht dabei die auf den Messtaster ausgeübte Kraft. In Abhängigkeit von der Geometrie des Auslenkungsprofils des Messtasters erhöht oder reduziert sich die auf diesen ausgeübte Kraft. Schließlich gleitet der zu vermessende Einzelfaden von der Tastflanke über die Abwurfflanke ab, was zu einer plötzlichen Änderung der auf den Messtaster ausgeübten Kraft führt, idealerweise zu einem sprunghaften Abfall der auf den Messtaster ausgeübten Kraft. Diese plötzliche Änderung der auf den Messtaster ausgeübten Kraft gibt Aufschluss über die tatsächliche Fadenspannung des Einzelfadens innerhalb der Fadenschar.

Gemäß einer Ausführungsform der Erfindung ist vorgesehen, dass die Tastflanke eine im Wesentlichen konstante Tastfilankensteigung aufweist und dass die Abwurfflanke im Wesentlichen orthogonal zur messaktiven Bewegungsrichtung und zur Längsrichtung der Fadenschar verläuft. Ähnlich wie vorstehend hinsichtlich der Führungskufe erwähnt, ist bei diesem erfindungsgemäßen Ausführungsbeispiel die Tastflanke beispielsweise in Form einer schiefen Ebene ausgebildet. Vorzugsweise ist jedoch die Tastflankensteigung größer als die Steigung der Führungskufe. Hinsichtlich der Abwurfflanke ist bei diesem Ausführungsbeispiel anzumerken, dass ein im Wesentlichen orthogonal zur messaktiven Bewegungsrichtung und zur Längsrichtung der Fadenschar ausgerichteter Verlauf der Abwurfflanke zu einem abrupten Abgleiten des jeweiligen die Abwurfflanke erreichenden Einzelfadens führt, was bei der Erfassung dessen Fadenspannung vorteilhaft ist.

Alternativ zu einer Tastflanke mit konstanter Tastflankensteigung, kann erfindungsgemäß vorgesehen sein, dass die Tastflanke ein vorbestimmtes Tastflankenprofil aufweist. Das Tastflankenprofil kann beliebig gewählt sein, beispielsweise in Form eines schrägen Tastflankenabschnitts für ein sanftes Aufgleiten der Einzelfäden auf die Tastflanke, bis die Einzelfäden um einen bestimmten Weg aus der von der Fadenschar gebildeten Ebene ausgelenkt sind, und eines sich an den schrägen Tastflankeabschnitt anschließenden, im Wesentlichen parallel zu der Ebene der Fadenschar verlaufenden waagerechten Tastflankenabschnitts. Es ist jedoch auch denkbar, das Tastflankenprofil in Form einer beliebig verlaufenden Kurve auszubilden.

Gemäß einer bevorzugten Ausführungsform der Erfindung ist vorgesehen, dass eine Mehrzahl von Einzelfäden gleichzeitig mit dem Messtaster in Wechselwirkung tritt, wobei die Fadenspannung eines Einzelfadens aus dem zeitlichen Verlauf der über den Messtaster erfassten Kraft, insbesondere beim Abgleiten des jeweiligen Einzelfadens von der Tastflanke bei Erreichen der Abwurfflanke, erfasst wird. Je nach Gestaltung des Tastflankenprofils lässt sich somit ein zeitlicher Verlauf der kumulierten Fadenspannung der augenblicklich mit dem Messtaster zusammenwirkenden Einzelfäden ermitteln. Aus diesem kumulierten Verlauf der Fadenspannung lässt sich, insbesondere unter Berücksichtigung der Änderung des Fadenspannungsverlaufs beim Abgleiten eines Einzelfadens von der Tastflanke bei Erreichen der Abwurfflanke, auf die Fadenspannung des gerade abgleitenden Einzelfadens schließen.

Obgleich durch die Erfindung bereits eine gegenüber dem Stand der Technik deutlich verbesserte Erfassung von Fadenspannungen ermöglicht wird, sieht eine Weiterbildung der Erfindung zur weiteren Verbesserung der Genauigkeit des Messergebnisses vor, dass aus während der Zeit zwischen zwei Abwürfen ermittelten Messwerten jeweils eine Regressionskurve, im einfachsten Fall ein Regressionsgerade, ermittelt wird, wobei die Fadenspannung eines Einzelfadens aus dem Verlauf von, insbesondere dem Abstand am Abwurfzeitpunkt zwischen zwei aufeinander folgend ermittelten Regressionskurven ermittelt wird. Durch die Ermittlung der Regressionskurven können störende Einflüsse, wie beispielsweise kurzzeitige Spannungsspitzen, wie sie während des Aufgleitens eines Einzelfadens auf die Tastflanke durch unruhigen Fadenlauf entstehen, oder ein verfrühtes bzw. verzögertes Abgleiten eines Einzelfadens bei Erreichen der Abwurfflanke, herausgemittelt werden. Auch Störeinflüsse bei der Messwerterfassung oder Signalverarbeitung, beispielsweise bedingt durch die Trägheit des Messtasters oder der nachgeschalteten Elektronik lassen sich dadurch eliminieren. Anhand der Regressionskurven ist es möglich, reproduzierbar den sprunghaften Abfall der erfassten kumulierten Fadenspannung bei einem Abgleiten eines Einzelfadens von der Tastflanke bei Erreichen der Abwurfflanke zu bestimmen. Als Kriterium für den Zeitpunkt des Abgleitens eines Einzelfadens von der Tastflanke kann beispielsweise das Überschreiten eines Maximalwerts oder ein Mindestabfall der Fadenspannung dienen.

Bei einer Weiterbildung der Erfindung kann die Berechnung der Fadenspannung eines Einzelfadens aus der zeitlichen Analyse des Sensorsignals durch Lösen eines Gleichungssystems, insbesondere mittels mathematischer Entfaltung, vorzugsweise mittels einer Korrelationsanalyse, erfolgen.

Gemäß einer Ausführungsform der Erfindung ist vorgesehen, dass der Messtaster nach Maßgabe der Fadenspannung auslenkbar, vorzugsweise elastisch deformierbar, jedoch so starr wie möglich ist. Bei einer bevorzugten Ausführungsform der Erfindung bewegt sich die Tastfläche nur um einige 1/100 mm unter der Last eines Fadens von 1000 cN. Vorzugsweise weist der Messtaster einen federnd angelenkten freitragenden Tastarm auf, der das Auslenkungsprofil trägt. Dabei sieht eine vorteilhafte Erfindungsvariante vor, dass die Eigenfrequenz des Messtasters, insbesondere des Tastarms, wenigstens um den Faktor 5, vorzugsweise wenigstens um den Faktor 10, größer ist als die Abtastrate von Einzelfäden pro Zeiteinheit. Vorzugsweise kann die Eigenfrequenz des Messtasters mindestens im Bereich von 500 Hz liegen. Wählt man beispielsweise die Geschwindigkeit, mit der sich der Messschlitten in der messaktiven Bewegungsrichtung quer über die Fadenschar bewegt, in einem Bereich von 2 m/min, so dass der Messtaster beispielsweise 20 Einzelfäden pro Sekunde hinsichtlich der Fadenspannung misst, so ist bei einer derartigen Eigenfrequenz der Faktor zwischen der Abtastrate und der Eigenfrequenz des Messtasters hinreichend hoch, um störende Einflüsse ohne Verfälschungen des Messergebnis ist mittels eines Tiefpass ausfiltern den zu können.

Als Überlastschutz kann bei einer Weiterbildung der Erfindung ein Anschlag zur Begrenzung der maximalen Deformation des Messtasters, insbesondere der maximalen Auslenkung des Tastarms vorgesehen sein.

Eine besonders zuverlässig arbeitende und verschleißbeständige Ausbildung des Messtasters lässt sich beispielsweise dadurch erreichen, dass wenigstens ein Deformationssensor, insbesondere ein Dehnmessstreifen, zur Bestimmung der Deformation des Messtasters, insbesondere der Auslenkung des Tastarms, eingesetzt wird.

Die Verschleißanfälligkeit sowie die Lebensdauer des Messtasters und dessen Zuverlässigkeit lassen sich erfindungsgemäß dadurch weiter erhöhen, dass die Tastflanke und gegebenenfalls die dem wenigstens einen Faden zugewandte Fläche der wenigstens einen Führungskufe mit einer reibungsmindernden oder/und verschleißarmen Beschichtung, vorzugsweise einer Keramikbeschichtung, versehen ist. Ferner lässt sich dadurch ein ruckfreies Gleiten der Einzelfäden auf der Tastflanke erreichen.

Zur Führung der Fadenschar sieht eine Weiterbildung der Erfindung wenigstens einen quer zur Längsrichtung der Fadenschar verlaufenden Überlaufstab vor. Vorteilhafterweise ist ein Überlaufstabpaar vorgesehen, wobei parallel zu den Überlaufstäben zwischen diesen der Messschlitten geführt ist. Diese Maßnahme dient zusätzlich oder alternativ zu den vorstehend erwähnten Führungskufen zur Vermeidung einer das Messergebnis verfälschenden unzureichenden Positionierung von Einzelfäden relativ zu dem Messtaster. Bei der Anordnung der Überlaufstäbe ist zu beachten, dass deren Umschlingung durch die Einzelfäden möglichst klein gehalten wird. In diesem Zusammenhang kann erfindungsgemäß insbesondere vorgesehen sein, dass sich der Messschlitten entlang einer Bewegungsbahn zwischen zwei Überlaufstabpaaren im Wesentlichen parallel zu diesen bewegt, wobei die Fadenschar bei jedem Überlaufstabpaar jeweils oberhalb des jeweils einen Überlaufstabs und unterhalb des jeweils anderen Überlaufstabs geführt ist und zumindest einen Überlaufstab über einen minimalen Umschlingungswinkel, vorzugsweise über einen Umschlingungswinkel von höchstens 25°, weiter bevorzugt von höchstens 10°, umschlingt.

Bei einer Weiterbildung der Erfindung weist die Vorrichtung eine Führungsanordnung auf, auf der der Messschlitten geführt ist. In diesem Zusammenhang kann vorgesehen sein, dass wenigstens einer der Überlaufstäbe als Führungselement der Führungsanordnung nutzbar ist.

Ferner kann erfindungsgemäß vorgesehen sein, dass der Messtaster zwischen einer messaktiven Bereitschaftsstellung und einer passiven Ruhestellung verlagerbar ist. Dies ist insbesondere im Hinblick auf eine Weiterbildung der Erfindung vorteilhaft, bei der der Messtaster bei einer Bewegung des Messschlittens in der messaktiven Bewegungsrichtung in seine Bereitschaftsstellung und bei einer Bewegung des Messschlittens entgegen der messaktiven Bewegungsrichtung in seine Ruhestellung verlagert ist. Dadurch lässt sich eine unbeabsichtigte Wechselwirkung zwischen Messtaster und Fadenschar bei einer Bewegung des Messschlittens entgegen der messaktiven Bewegungsrichtung unterbinden.

Eine Weiterbildung der Erfindung sieht vor, dass der Messschlitten einen motorischen Antrieb aufweist, der eine Bewegung in und entgegen der messaktiven Bewegungsrichtung zulässt.

Grundsätzlich ist es möglich, mit der erfindungsgemäßen Vorrichtung eine ruhende Fadenschar hinsichtlich der Fadenspannung der Einzelfäden zu vermessen. Die erfindungsgemäße Vorrichtung findet jedoch insbesondere dann Anwendung, wenn sich die Fadenschar in deren Längsrichtung in einer Fadenlaufrichtung bewegt. In einem solchen Anwendungsfall werden die Einzelfäden beispielsweise von Spulen abgewickelt, die dem Abwickelvorgang einen einstellbaren Widerstand entgegensetzen. Stellt sich heraus, dass die mit der erfindungsgemäßen Vorrichtung erfassten Fadenspannung eines bestimmten Einzelfadens zu groß oder zu klein ist, so kann nach Maßgabe der erfassten Fadenspannung der dem Abwickelvorgang entgegengesetzte Widerstand an der betreffenden Spule entsprechend angepasst werden, so dass letztendlich die Fadenspannungen in der Einzelfäden der Fadenschar im Wesentlichen einander angeglichen werden.

Um bei der Erfassung von Fadenspannungen der Einzelfäden der Fadenschar eine definierte Positionierung der Einzelfäden quer zur Fadenlängsrichtung zu erreichen, ist in einer Weiterbildung der Erfindung ein quer zur Längsrichtung der Fadenschar, insbesondere quer zur Fadenlaufrichtung, verlaufendes Fadenrichtorgan vorgesehen, vorzugsweise ein Riet, das bezüglich der Fadenlaufrichtung der Bahn des Messschlittens unmittelbar vorgelagert oder nachgelagert ist.

Vorstehend wurde bereits angedeutet, dass es in verschiedenen Anwendungsfällen der erfindungsgemäßen Vorrichtung zumindest vorteilhaft sein kann, wenn zusätzlich zu der Bestimmung der Fadenspannung eines Einzelfadens dieser durch Abzählen reproduzierbar identifiziert wird. Dies kann aus dem Kraftsignal des Sensors abgeleitet werden, wenn es zur Positionsinformation in Beziehung gesetzt wird. Eine Weiterbildung der Erfindung sieht eine Erfassungseinrichtung vor, insbesondere eine optische Erfassungseinrichtung, vorzugsweise eine Transmissionslichtschranke, zur Erfassung der Position des wenigstens einen Einzelfadens. Alternativ kann auch die Position des Fadenrichtorgans abgetastet werden. Dadurch können die erfassten Fadenspannungen bestimmten Einzelfäden anhand deren Position innerhalb der Fadenschar zugeordnet werden. Die Möglichkeit zur Identifikation von Einzelfäden innerhalb der Fadenschar und zur Zuordnung der erfassten Fadenspannungen zu den identifizierten Einzelfäden eröffnet weitreichende Optionen hinsichtlich einer zeitlichen Überwachung und Archivierung von Fadenspannungen.

Besonders wenn die Identifizierung und Nummerierung der Einzelfäden direkt aus dem Spannungssignal erfolgt, kann ausgenutzt werden, dass die Einzelfäden üblicherweise in einem festen Raster geführt werden um das Signal eines Einzelfadens von Störungen zu unterscheiden. Dazu wird beispielsweise die Tatsache ausgenutzt, dass einer Sollposition nur eine Signalform zugeordnet wird. Für die Auswahl werden die Stärke des Signals und die zeitliche Abweichung von der erwarteten Sollstelle gewichtet herangezogen.

Bei einer Weiterbildung der Erfindung ist vorgesehen, dass die Vorrichtung im Bereich von zur erwartenden Soll-Positionen erhaltene Messwerte gewichtet und nach Maßgabe der Amplituden der Messwerte und der Abweichung von der Soll-Position Störsignale ausblendet. Beispielsweise werden Messwerte geringerer Amplitude und/oder größeren Abstands von einer zur erwartenden Soll-Position geringer gewichtet als Messwerte mit größerer Amplitude, die näher an der zur erwartenden Soll-Position liegen. Dadurch lassen sich fehlerhafte Messungen leichter ausschließen.

Gemäß einer Ausführungsvariante weist die erfindungsgemäße Vorrichtung eine elektronische Steuereinrichtung zur Ansteuerung des Messschlittens und zur Auswertung der über den Messtaster gewonnenen Messdaten auf. In diesem Zusammenhang kann unter Berücksichtigung der vorstehenden Ausführungen hinsichtlich der Positionserfassung ferner vorgesehen sein, dass die Steuereinrichtung anhand von bereits erfassten Positionen bereits spannungsvermessener Einzelfäden einen Bereich einer zu erwartenden Soll-Position zukünftiger Einzelfäden der Fadenschar bestimmt und beim Erfassen von Einzelfäden diese ermittelten Soll-Positionen zuordnet. Dadurch ist es möglich, dass die Steuereinrichtung über den Messtaster erhaltene Messwerte bereits spannungsvermessener Einzelfäden jeweiligen vorbestimmten Soll-Positionen zuordnet und bei Ausbleiben eines Messwertes an einer Soll-Position eines zu erwartenden Einzelfadens diese Soll-Position als mögliche Fehlstelle registriert. So lässt sich nach einer einmaligen oder mehrfachen Überquerung der Fadenschar durch den Messschlitten in der messaktiven Bewegungsrichtung ein aktuelles Bild über die Fadenspannungen der Fadenschar und mögliche Fehlstellen erstellen. Erfasste Fehlstellen können in der Folge an eine Bedienungsperson in Form einer Fehler- oder Alarmmeldung gemeldet werden.

Ferner kann in diesem Zusammenhang vorgesehen sein, dass die Steuereinrichtung über den Messtaster erhaltene Messwerte bereits spannungsvermessener Einzelfäden mit einem Soll-Fadenspannungsbereich vergleicht und dann, wenn ein Messwert eines spannungsvermessenen Einzelfadens außerhalb des Soll-Fadenspannungsbereichs liegt, die zugehörige Soll-Position als mögliche Fehlstelle registriert. Auch derartige Fehlerstellen können an eine Bedienungsperson gemeldet werden.

Hinsichtlich einer Langzeitmessung kann erfindungsgemäß vorgesehen sein, dass sich der Messschlitten insbesondere bei einer Bewegung der Fadenschar in Fadenlaufrichtung mehrfach quer über die Fadenschar in und entgegen der messaktiven Bewegungsrichtung hin und her bewegt und die Einzelfäden der Fadenschar mehrfach vermisst. Eine Weiterbildung der Erfindung sieht in diesem Zusammenhang vor, dass die Steuereinrichtung eine Mehrzahl von Einzelmesswerten für jede Sollposition speichert. Diese Einzelmesswerte können derart weiterverarbeitet werden, dass sich für die jeweilige Soll-Position ein Fadenspannungswertebereich, oder/und ein Fadenspannungs-Maximum, oder/und ein Fadenspannungs-Minimum oder/und ein Fadenspannungs-Mittelwert ergibt. Vorzugsweise wird aus einer bestimmten Anzahl von Einzelmesswerten, beispielsweise aus 5 Einzelmesswerten ein Fadenspannungs-Mittelwert gebildet. Aus diesem Mittelwert kann für einen längeren Zeitraum dann wiederum ein Fadenspannungs-Maximum, ein Fadenspannungs-Minimum oder/und ein Fadenspannungs-Mittelwert abgeleitet werden. Dadurch lassen sich beispielsweise langfristige Effekte erfassen oder die Auswirkungen eines korrigierenden Eingriffs durch eine Bedienungsperson oder die Änderung technischer Parameter beobachten.

Hinsichtlich der Qualitätssicherung und Dokumentation von Fertigungsprozessen kann erfindungsgemäß ferner vorgesehen sein, dass die Steuereinrichtung einen Langzeitspeicher aufweist, der den zeitlichen Verlauf der Spanungswerte für jeden Einzelfaden protokolliert und ermittelte Fadenspannungsmesswerte, Fadenspannungsbereiche, Fadenspannungs-Maxima, Fadenspannungs-Minima oder/und Fadenspannungs-Mittelwerte speichert.

Die Erfindung betrifft ferner eine textile Produktionsanlage, umfassend ein Gatter, insbesondere ein Spulengatter, ein Riet, insbesondere ein Ösenriet, ggf. einen Schlichtetrog und einen Trockner sowie einen Schärkopf oder eine Spulenwickeleinrichtung, wobei eine Fadenschar von dem Gatter abläuft, durch das Riet geführt ist und den Schlichtetrog sowie den Trockner durchläuft, bis die Fadenschar an dem Schärkopf oder der Spulenwickeleinrichtung aufgewickelt wird, wobei die textile Produktionsanlage darüber hinaus eine Vorrichtung der vorstehend beschriebenen Art aufweist, die vorzugsweise zwischen dem Riet und dem Schlichtetrog angeordnet ist.

Eine Weiterbildung der erfindungsgemäßen textilen Produktionsanlage sieht vor, dass das Gatter oder/und die Spulenwickeleinrichtung nach Maßgabe der mit der erfindungsgemäßen Vorrichtung der vorstehend beschriebenen Art erfassten Fadenspannung der Einzelfäden der Fadenschar ansteuerbar ist.

Die Erfindung betrifft ferner einen Messschlitten entsprechend vorstehender Beschreibung.

Die Erfindung betrifft schließlich ferner ein Verfahren zum Steuern einer Vorrichtung zum Erfassen der Fadenspannung wenigstens eines Einzelfadens einer Fadenschar in der Textilverarbeitung, insbesondere einer Vorrichtung der vorstehend beschriebenen Art, wobei die Fadenschar eine Mehrzahl von im Wesentlichen parallel zueinander geführter Einzelfäden aufweist, wobei die Vorrichtung einen Messschlitten aufweist, der quer zur Fadenschar in einer messaktiven Bewegungsrichtung bewegt wird, wobei weiter der Messschlitten einen Messtaster aufweist, der bei der Bewegung des Messschlittens in der messaktiven Bewegungsrichtung mit dem wenigstens einen Einzelfaden zur Bestimmung der Fadenspannung in Wechselwirkung tritt. Bei dem erfindungsgemäßen Verfahren ist vorgesehen, dass der Messtaster ein Auslenkungsprofil aufweist, das an dem wenigstens einen Einzelfaden zur Bestimmung der Fadenspannung angreift, wobei die Vorrichtung den zeitlichen Verlauf des Sensorsignals erfasst und anhand des zeitlichen Verlaufs des Sensorsignals unter Berücksichtigung der Geometrie des Auslenkungsprofils die Fadenspannung des wenigstens einen Einzelfadens bestimmt.

Die Erfindung wird im Folgenden anhand der beiliegenden Figuren beispielhaft erläutert. Es stellen dar:

Fig. 1     eine schematische Darstellung der erfindungsgemäßen Vorrichtung;

Fig. 2     eine schematische Draufsicht auf eine erfindungsgemäße textile Produktionsanlage;

Fig. 3     eine schematisierte Seitenansicht auf einen erfindungsgemäßen Messschlitten in einer Messsituation;

Fig. 4     eine mögliche Anordnung von Überlaufstäben gemäß der Erfindung;

Fig. 5     eine schematische Darstellung zur Erläuterung der an einem Einzelfaden auftretenden Kräfte;

Fig. 6     eine perspektivische Einzelteildarstellung des erfindungsgemäßen Messtasters;

Fig. 7     eine Darstellung des Messtasters entsprechend Fig. 6, jedoch mit beidseits angeordneten Führungskufen;

Fig. 8     eine Darstellung eines idealisierten Messwert-Verlaufs über der Zeit beim Messen von Fadenspannungen einer Fadenschar;

Fig. 9     eine Darstellung entsprechend Fig. 8 eines tatsächlichen Messwert-Verlaufs mit ermittelten Regressionsgeraden und

Fig. 10a-d     verschiedene Ausführungsbeispiele hinsichtlich des Verlaufs von Tastflanke und Abwurfflanke des Auslenkungsprofils.

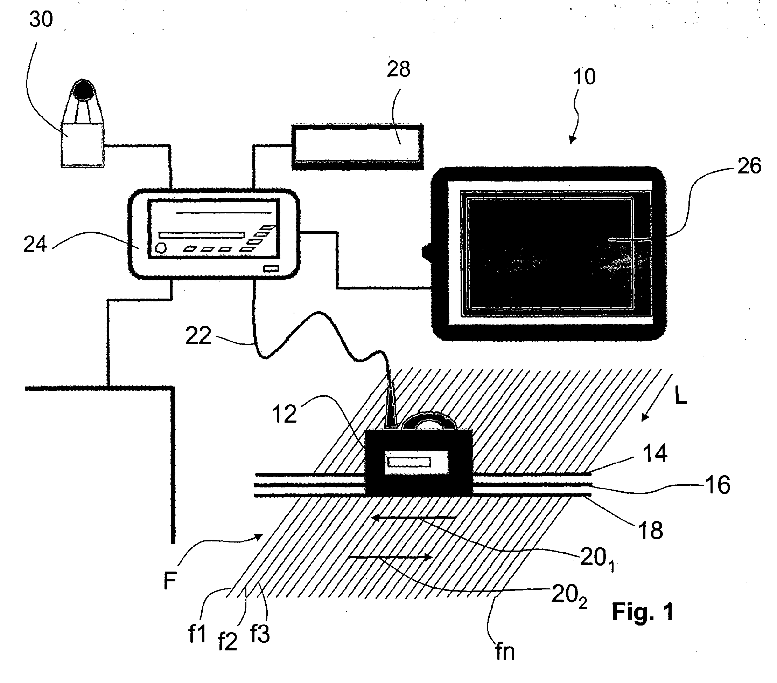

Figur 1 zeigt in einer schematischen Übersichtsdarstellung eine erfindungsgemäße Vorrichtung 10. Diese umfasst einen Messschlitten 12, der auf drei Überlaufstäben 14, 16, 18 entlang des Pfeils $20_1$ in einer messaktiven Bewegungsrichtung bewegbar ist. Die Überlaufstäbe 14, 16, 18 wirken für den Messschlitten wie Schienen und bestimmen dessen Bewegungsbahn. Diese Überlaufstäbe 14, 16, 18 sind quer zu Einzelfäden f1, f2, f3,..., fn einer Fadenschar F angeordnet und ermöglichen eine Bewegung des Messschlittens 20 quer zur Längsrichtung L der Einzelfäden f1, f2, f3,..., fn der Fadenschar F. Diese Fadenschar F bewegt sich mit einer Geschwindigkeit von beispielsweise 1 000 m/min in Richtung der Längsachse L, wie im Folgenden noch näher erläutert wird. Der Messschlitten 12 bewegt sich mit einer Geschwindigkeit von beispielsweise 2m/min quer über die Fadenschar F in Figur 1 nach links in seine messaktive Bewegungsrichtung entsprechend Pfeil $20_1$. Nach Erreichen des linken Endes der Fadenschar F bewegt sich der Messschlitten 12 entsprechend Pfeil $20_2$ in Figur 1 nach rechts entgegen der messaktiven Bewegungsrichtung bis er das rechte Ende der Fadenschar F erreicht. Dabei erfolgt keine Messung. Sodann erfolgt wiederum eine Bewegung in Figur 1 nach links entlang der messaktiven Bewegungsrichtung $20_1$.

Der Messschlitten 12 ist über ein flexibles Datenkabel 22 mit einer Steuereinrichtung 24 verbunden. Die Steuereinrichtung 24 steuert die Bewegung des Messschlittens 12 entsprechend vorstehender Beschreibung. Sie kann diesen ferner im Falle eines erfassten Fehlzustandes anhalten oder anderweitige Bewegungsschemata abarbeiten.

Die erfindungsgemäße Vorrichtung 10 umfasst ferner eine Benutzerschnittstelle 26, beispielsweise mit einem berührungssensitiven Schirm (Touchscreen) zur Eingabe und Ausgabe von Parametern sowie zur Darstellung der Messergebnisse. Ferner umfasst die erfindungsgemäße Vorrichtung 10 eine Anzeigeeinrichtung 28 zur Anzeige des Funktions- und Betriebszustandes oder Information zu erkannten Fehlstellen. Figur 1 zeigt ferner eine Signalvorrichtung 30, mittels der im Falle einer Fehlfunktion der Vorrichtung 10 oder insbesondere im Falle bestimmter Messergebnisse ein akustisches und/oder optisches Alarmsignal, beispielsweise in Form einer blinkenden Warnlampe, ausgegeben werden kann.

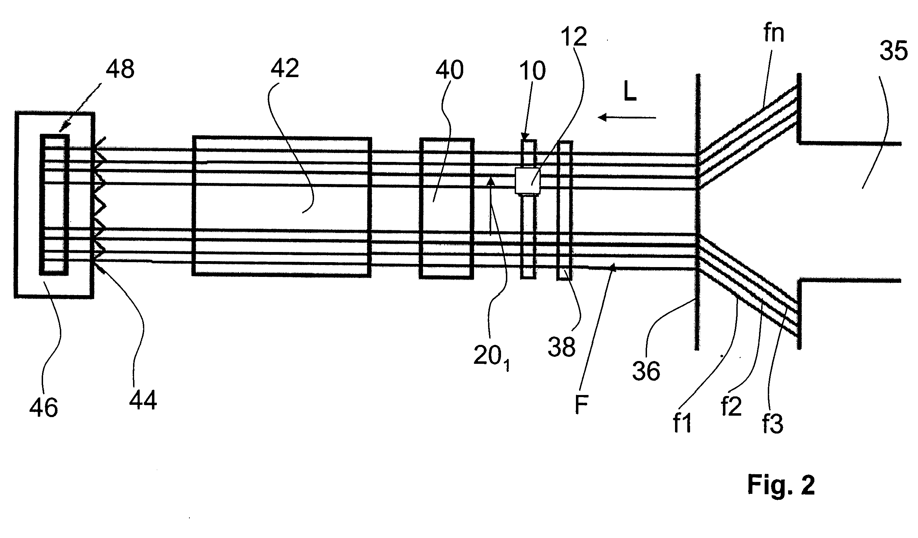

Im Folgenden soll der Einsatzfall der erfindungsgemäßen Vorrichtung 10 gemäß Figur 1 anhand der schematischen Darstellung von Figur 2 am Beispiel einer Schlichtanlage erläutert werden. Es ist jedoch vorab anzumerken, dass die erfindungsgemäße Vorrichtung 10 gleichsam innerhalb einer Direkt-Schermaschine, Zettelmaschine, Sektional-Schermaschine oder einer sonstigen textilverarbeitenden Maschine eingesetzt werden kann, bei der eine Fadenschar hinsichtlich Fadenspannungen der Einzelfäden zu überwachen ist.

Die Schlichtanlage 34 gemäß Figur 2 weist ein Gatter 35 auf, das eine Mehrzahl von nicht gezeigten Spulen lagert. Von den Spulen werden einzelne Fäden f1, f2, f3,..., fn abgewickelt und durch ein Ösenriet 36 zur Ausrichtung geführt, so dass sich in Figur 2 auf der linken Seite des Ösenriets 26 eine Fadenschar F ergibt, die in der Längsrichtung der Einzelfäden L, beispielsweise mit der vorstehend bereits genannten Geschwindigkeit von 1000 m/min, bewegt wird. Zunächst läuft die Fadenschar F durch einen Flusenwächter 38, der die Qualität der Fäden beispielsweise durch optische Abtastung mittels Laser überprüft. Im Anschluss an den Flusenwächter 38 läuft die Fadenschar F durch die erfindungsgemäße Vorrichtung 10 zur Erfassung der Fadenspannungen der Einzelfäden f1, f2, f3, ..., fn. Die Funktionsweise der erfindungsgemäßen Vorrichtung 10, insbesondere die Funktionsweise des erfindungsgemäßen Messschlittens 12, wird im Folgenden im Detail erläutert. Im Anschluss an die erfindungsgemäße Vorrichtung 10 zur Ermittlung der Fadenspannung läuft die Fadenschar F durch einen Schlichtetrog 40, in dem die Einzelfäden f1, f2, f3,..., fn mit Schlichte versehen werden. Nach Verlassen des Schlichtetrogs 40 läuft die Fadenschar F durch einen Trockner 42 in dem die Einzelfäden der Fadenschar F getrocknet werden. Nach Verlassen des Trockners 42 passieren die Einzelfäden f1, f2, f3,..., fn ein Z-Riet 44, bevor sie in einen Scherkopf 46 eintreten, wo sie auf einen Baum 48 aufgewickelt werden.

Alternativ zum Scherkopf 46 kann auch eine textile Produktionsmaschine, beispielsweise eine Web-, Wirk- oder Strickmaschine vorgesehen sein, die die Fadenschar F direkt zu einem textilen Flächengebilde weiterverarbeitet.

Figur 2 zeigt den Messschlitten 12 gerade bei seiner Bewegung entlang der messaktiven Bewegungsrichtung $20_1$ nach oben, quer zu der Fadenschar F.

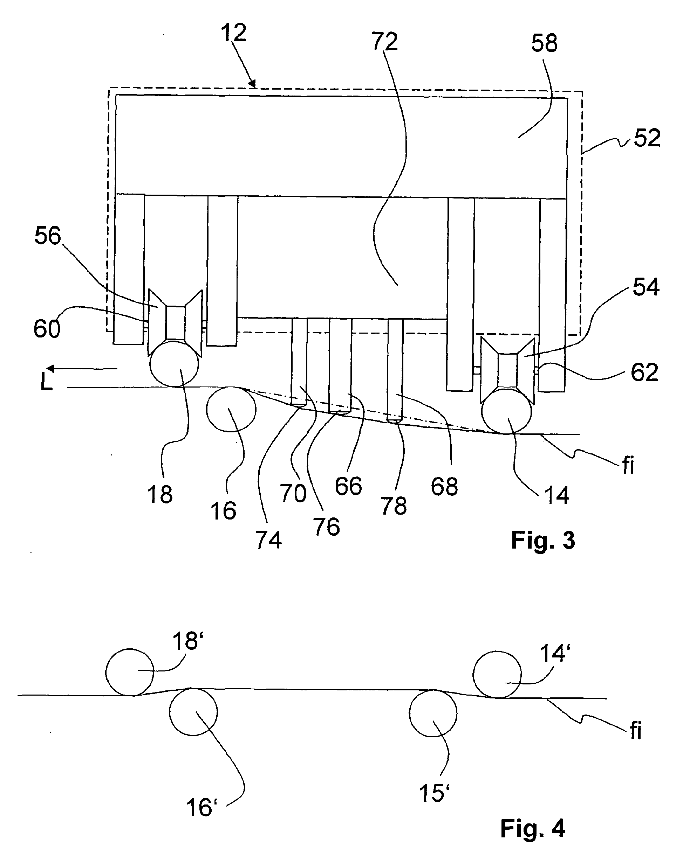

Figur 3 zeigt den erfindungsgemäßen Messschlitten 12 in schematischer Darstellung in einer Seitenansicht in Richtung der messaktiven Bewegungsrichtung. Bei der Darstellung gemäß Figur 3 ist ein Gehäuse 52 des Messschlittens 12 lediglich strichliert eingezeichnet, so dass wesentliche Elemente des Messschlittens in der schematischen Darstellung gemäß Figur 3 erkennbar sind. Figur 3 lässt erkennen, dass der Messschlitten 12 über doppel-T-förmige Lagerwalzen 54 und 56, die in einem Basisgestell 58 auf Achsen 60, 62 reibungsarm und spielarm gelagert sind, auf den Überlaufstäben 14 und 18 aufsitzen. Die Überlaufstäbe 14 und 18 wirken dabei als Schienen für die in Figur 3 orthogonal zur Zeichenebene verlaufende Bewegungsrichtung des Messschlittens 12. Über die Überlaufstäbe 14 ist ein Einzelfaden fi geführt, der sich entlang der Längsrichtung L mit verhältnismäßig hoher Geschwindigkeit bewegt. Ohne Vorhandensein des an dem Einzelfaden fi angreifenden Messschlittens 12 hätte der Einzelfaden fi gemäß Figur 3 den strichpunktierten Verlauf. In einem zentralen Bereich des Messschlittens 12 ist allerdings ein Messtaster 66 an dem Messschlitten angeordnet, der mit dem Einzelfaden fi bei Überfahren der Fadenschar F in Kontakt tritt. Beidseits des Messtasters 66 ist jeweils eine Führungskufe 68, 70 vorgesehen, die ebenfalls mit dem zu vermessenden Einzelfaden fi in Kontakt treten. Die Führungskufen 68, 70 sind fest mit einer Lagereinheit 72 des Messschlittens 12 verbunden. Auch der Messtaster 66 ist an der Lagereinheit 72 angebracht, jedoch nach Maßgabe der Fadenspannung des Einzelfadens fi in begrenztem Maße elastisch deformierbar. An der mit dem Einzelfaden fi in Kontakt tretenden Unterseite von Messtaster 66 und Führungskufen 68, 70 weisen diese jeweils eine verschleißfeste und reibungsmindernde Keramikbeschichtung 74, 76, 78 auf. Dadurch ist gewährleistet, dass der Einzelfaden fi und jeder weitere Einzelfaden der Fadenschar F reibungsarm über die Führungskufen 68 und 70 sowie den Messtaster 66 hinweggleiten können.

Figur 4 zeigt eine alternative Anordnung von Überlaufstäben 14', 15', 16' und 18', durch die der Einzelfaden fi mit geringer Umschlingung - und damit reibungsarm - um jeden Überlaufstab geführt ist. Die beiden Überlaufstäbe 14' und 18' können dabei zur Führung des in Fig. 4 nicht gezeigten Messschlittens dienen, wobei die Lagerwalzen des Messschlittens im Wesentlichen auf gleichem Niveau angeordnet werden.

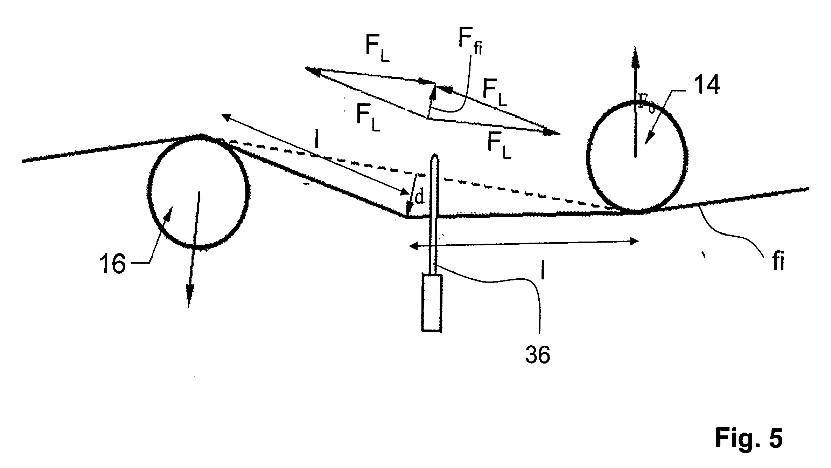

Im Folgenden soll unter Bezugnahme auf Figuren 5, 6 und 7 auf den Aufbau des Messtasters 66 sowie der Baugruppe bestehend aus Messtaster 66 und Führungskufen 68 und 70 eingegangen werden.

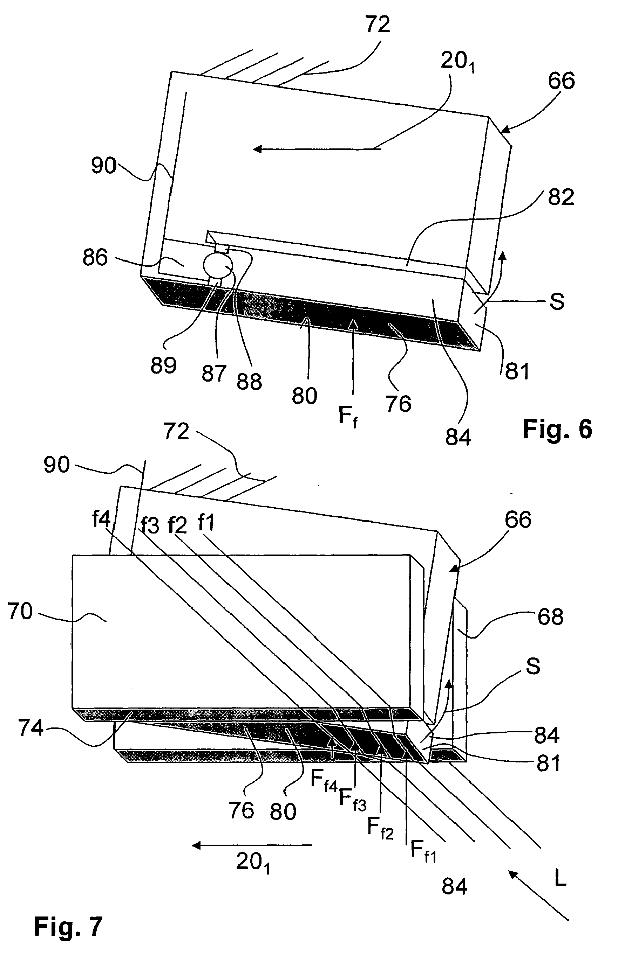

Figur 6 zeigt den Messtaster 66 in schematischer perspektivischer Darstellung. Der Messtaster 66 ist aus einem Materialblock, beispielsweise aus einem Aluminiumblock hergestellt und weist ein Auslenkungsprofil auf. Ein Bereich des Auslenkungsprofils wird von einer an der Unterseite des Messtasters 66 vorgesehenen Tastflanke 80 gebildet, die - wie vorstehend bereits ausgeführt - zumindest abschnittsweise mit der Keramikbeschichtung 76 versehen ist. In einem der Tastflanke 80 nahen Bereich ist der Messtaster 66 über seine gesamte Breite und einen Großteil der Länge mit einem Schlitz 82 versehen, so dass sich ein Tastarm 84 ausbildet, der entsprechend Pfeil S unter der Wirkung einer von einem Einzelfaden ausgeübten Kraft $F_f$ elastisch deformierbar ist. Der Tastarm 84 ist an einer Stelle 86 nahe dem Ende des Schlitzes 82 durch eine Bohrung 87 geschwächt, so dass oberhalb und unterhalb der Bohrung 87 dünne Materialabschnitte bestehen bleiben, über die der Tastarm 84 an dem Messtaster 66 gehalten wird. Diese dünnen Materialabschnitte beidseits der Bohrung 87 wirken im Stile eines Gelenks für den Tastarm 84. An diesen dünnen Materialabschnitten sind Dehnmessstreifen 88 und 89 angeordnet, die eine Auslenkung des Tastarms 84 erfassen und entsprechende Messergebnisse über eine Verbindungsleitung 90 an die elektronische Steuereinheit 24 ausgeben. Wird der Tastarm 84 beispielsweise durch die Kraft $F_f$ entsprechend dem Pfeil S ausgelenkt, so erfasst der Dehnmessstreifen 88 eine Komprimierung und der Dehnmessstreifen 89 eine Dehnung des jeweils zugeordneten dünnen Materialabschnitts oberhalb bzw. unterhalb der Bohrung 87. Durch Differenzwertbildung der von den beiden Dehnmessstreifen 88 und 89 ausgegebenen der Signale lässt sich zuverlässig und mit hoher Genauigkeit der Betrag der Auslenkung des Tastarms 84 ermitteln. Am freien Ende des Tastarms 84 schließt sich an die Tastflanke 80 eine Abwurfflanke 81 an, die einen weiteren Abschnitt des Auslenkungsprofils bildet.

Figur 7 lässt nun die Verhältnisse am Messtaster beim Abtasten einer Gruppe von Einzelfäden f1, f2, f3 und f4 erkennen, wenn sich der Messtaster 66 entsprechend dem Pfeil $20_1$ in der messaktiven Bewegungsrichtung mit dem Messschlitten 12 bewegt. Die vier repräsentativ für die Fadenschar F gezeigten Einzelfäden f1, f2, f3 und f4 laufen auf die Keramikflächen 74 und 78 der Führungskufen 70 und 68 auf und werden so in definierter Weise ausgelenkt. Schließlich gelangen sie in einen Bereich, in dem der Messtaster 66 mit seinem Tastarm 84 in Längsrichtung L der Einzelfäden betrachtet über die Keramikflächen 74 und 78 der Führungskufen hinaussteht. Dabei wird, wie in Figur 7 gezeigt, der Einzelfaden f1 weiter ausgelenkt, als der Einzelfaden f2, welcher wieder weiter ausgelenkt wird als der Einzelfaden f3 bzw. f4. Mit der Auslenkung steigt die ausgübte Kraft auf den Sensor. Setzt man zur Vereinfachung der Beschreibung zunächst voraus, dass alle Einzelfäden f1, f2, f3 und f4 jeweils die selbe Spannung aufweisen, so bedeutet dies, dass die von dem Einzelfaden f1 auf den Messtaster 66 ausgeübte Kraft $F_{f1}$ größer sein muss, als die von dem Einzelfaden f2 ausgeübte Kraft $F_{f2}$, welche wiederum größer sein muss als die auf den Messtaster 66 von dem Einzelfaden f3 ausgeübte Kraft $F_{f3}$ und die auf den Messtaster 66 von dem Einzelfaden f4 ausgeübte Kraft $F_{f4}$. Die von den Einzelfäden f1, f2, f3 und f4 ausgeübten Kräfte $F_{f1}$, $F_{f2}$, $F_{f3}$ und $F_{f4}$ stehen in unmittelbarem Zusammenhang zu den in den Einzelfäden f1, f2, f3 und f4 herrschenden Fadenspannungen $F_L$. Dies ergibt sich aus dem in Figur 5 gezeigten Schema, das vereinfacht eine Anordnung ohne Führungskufen zeigt, wobei die Auslenkung d des Einzelfadens $f_i$ durch den Messtaster 66 erreicht wird. Es gilt die Beziehung:

$$F_{fi} = 2d/l * F_L,$$

wobei

$f_i$     die von dem Einzelfaden $f_i$ auf den Messtaster ausgeübte Kraft ist,

$F_L$     die Fadenspannung im Einzelfaden $f_i$ ist;

d     die Auslenkung des Einzelfadens $f_i$ relativ zu dem strichlierten Fadenverlauf bei Abwesenheit des Messtasters ist;

l     die Fadenlänge zwischen Faden-Kontaktstelle am jeweiligen Überlaufstab 14 bzw. 16 und der Faden-Kontaktstelle des Messtasters ist.

Die vorstehende Beziehung zeigt, wie sich aus der auf das Auslenkungsprofil des Messtasters 66 ausgeübten Kraft $F_{fi}$ auf die Fadenspannung zurück rechnen lässt. Der Vollständigkeit halber sei angemerkt, dass Figur 5 auch noch ein Riet 36' zur Ausrichtung der Einzelfäden zeigt.

Wendet man sich nunmehr wiederum Figur 7 zu und berücksichtigt dabei zur vereinfachten Erläuterung den idealisierten Fadenverlauf gemäß Fig. 5, so erkannt man, dass bei der Darstellung gemäß Figur 7 vier Einzelfäden f1, f2, f3 und f4 in Summe eine Kraft auf den Messsensor 66 ausüben. Es ergibt sich eine kumulierte Kraft $F_s(t)$ auf den Messtaster 66, für die gilt

$$F_S(t) = \sum_{i=1}^{n} F_{fi}$$

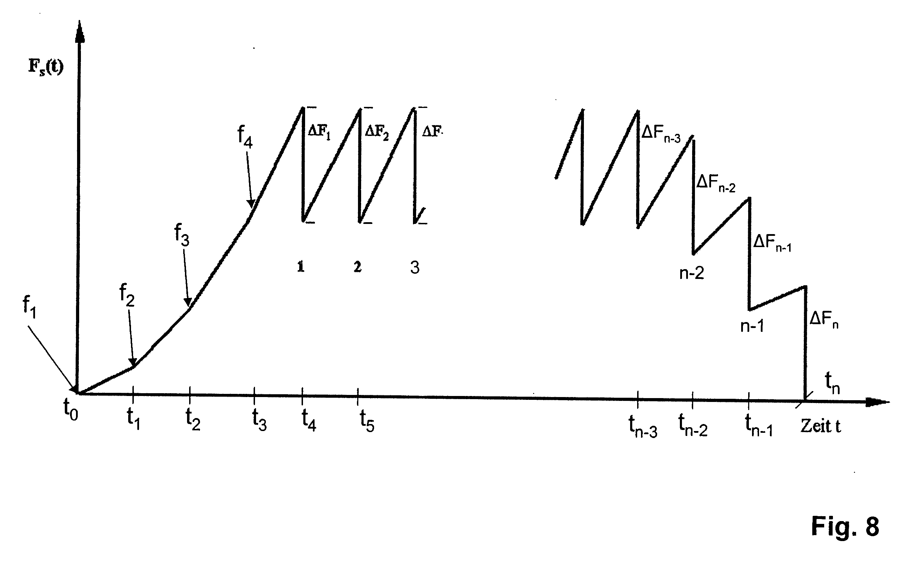

Zur Erläuterung des Verlaufs der kumulierten Kraft $F_s(t)$ während der Messung der Fadenspannungen einer Fadenschar F sei auf Figur 8 verwiesen, die einen idealisierten Messwertverlauf am Messtaster 66 zeigt. Zu Beginn der Messung steigt die kumulierte Kraft $F_s(t)$ zunächst schrittweise immer steiler an, je mehr Einzelfäden mit der Tastflanke 80 in Kontakt treten. Der zeitliche Verlauf der auf den Messtaster wirkenden Kraft $F_s(t)$ ergibt sich daraus, dass zunächst zum Zeitpunkt t0 der erste Einzelfaden f1 mit der Tastflanke 80 des Messtasters in Kontakt kommt und bei einer Bewegung des Tastschlittens entsprechend der Bewegungsrichtung $20_1$ an der Tastflanke 80 hochgleitet, wodurch sich die auf den Messtaster 66 ausgeübte Kraft erhöht. Zum Zeitpunkt $t_1$ kommt der nächste Einzelfaden f2 mit dem Messtaster in Kontakt und übt in Folge der Bewegung entsprechend Pfeil $20_1$ zusätzlich von der durch den Einzelfaden f1 ausgeübten Kraft $F_{f1}$ die weitere Kraft $F_{f2}$ auf den Messtaster 66 aus. Aufgrund der Tatsache, dass die beiden Einzelfäden f1 und f2 wegen der Bewegungen entsprechend Pfeil $20_1$ auf dem Messtaster 66 entlang gleiten und dadurch weiter ausgelenkt werden, so dass sich in ihnen die Spannung erhöht, steigt auch die auf dem Messtaster 66 ausgeübte kumulierte Kraft $F_s(t)$ weiter an, bis zum Zeitpunkt $t_2$, an dem der Einzelfaden f3 mit der Tastfläche 80 des Messtasters 66 in Kontakt tritt. Wiederum steigt bei einer Weiterbewegung des Messtasters 66 mit dem Messschlitten 12 die kumulierte Kraft $F_s$ weiter an, bis zum Zeitpunkt $t_3$, an dem der Einzelfaden f4 mit dem Messtaster in Kontakt tritt. Es ist nochmals anzumerken, dass mit jedem in Kontakt treten eines weiteren Einzelfadens fi mit der Tastflanke 80 des Messtasters 66 über diesen weiteren Einzelfaden eine zusätzliche Kraft auf den Messtaster ausgeübt wird, so dass die auf den Messtaster ausgeübte kumulierte Kraft $F_s$ steiler ansteigt.

Zum Zeitpunkt $t_4$ hat sich der zu aller erst mit dem Messtaster 66 in Kontakt getretene Einzelfaden f1 soweit auf der Tastflanke 80 des Messtasters 66 verschoben, dass er schließlich das Ende der Tastflanke 80 erreicht und entlang der Abwurfflanke 84 abgleitet. Dies führt aber dazu, dass die auf den Messtaster 66 von den Einzelfäden ausgeübte kumulierte Kraft $F_s(t)$ abrupt abfällt, was durch den Sprung zum Zeitpunkt $t_4$ und die Bezeichnung $\Delta F_1$ angegeben ist. Der Einzelfaden $f_1$ übt nach einem Abgleiten entlang der Abwurfflanke 84 keine weitere Kraft mehr auf den Messtaster 66 aus, so dass sich die kumulierte Kraft $F_s(t)$ nur noch aus den Kräften der mit der Tastflanke 80 weiterhin in Kontakt verbleibenden übrigen Einzelfäden f2, f3 und f4 ergibt. Bei einer Weiterbewegung des Messtasters 66 mit dem Messschlitten 12 entsprechend der messaktiven Bewegungsrichtung $20_1$ kommt allerdings ebenfalls etwa zum Zeitpunkt $t_4$ ein weiterer in Fig. 7 nicht gezeigter Einzelfaden f in Kontakt mit dem Messtaster 66. Ferner werden die verbleibenden Messfäden f2, f3, f4 weiter ausgelenkt, so dass vom Zeitpunkt $t_4$ an die kumulierte Kraft $F_s(t)$ wieder ansteigt. Sie steigt solange an, bis zum Zeitpunkt $t_5$ der Einzelfaden f2 wieder das Ende der Tastflanke 80 erreicht und über die Abwurfflanke 84 abgleitet. Erneut kommt es zu einem sprunghaften Abfall der auf den Messtaster 66 ausgeübten kumulierten Kraft $F_s(t)$, der durch $\Delta F_2$ angegeben ist. Der Verlauf der auf den Messtaster 66 ausgeübten kumulierten Kraft setzt sich entsprechend fort, wie in Figur 8 gezeigt, bis schließlich das Ende der Fadenschar F erreicht wird. Zum Zeitpunkt $t_{n-3}$ gleitet der viertletzte Faden fn-3 von dem Messtaster 66 über die Abwurfflanke 84 ab. Zum Zeitpunkt $t_{n-2}$ gleitet der drittletzte Faden fn-2 ab, zum Zeitpunkt $t_{n-1}$ gleitet der vorletzte Faden fn-1 vom Messtaster 66 ab und schließlich gleitet zum Zeitpunkt $t_n$ der letzte Faden fn vom Messtaster 66 ab. Aus dem Verlauf der kumulierten Kraft $F_s(t)$, insbesondere aus den Kraftabfällen $\Delta F_1$, $\Delta F_2$ usw. lässt sich auf die Spannung der Einzelfäden f1, f2, ..., fn schließen. Dennoch ist keine Einzelfadenmessung erforderlich, sondern es kann in schneller und wirtschaftlicher Weise eine Messung der gesamten Fadenschar F anhand von Fadengruppenmessungen vorgenommen werden.

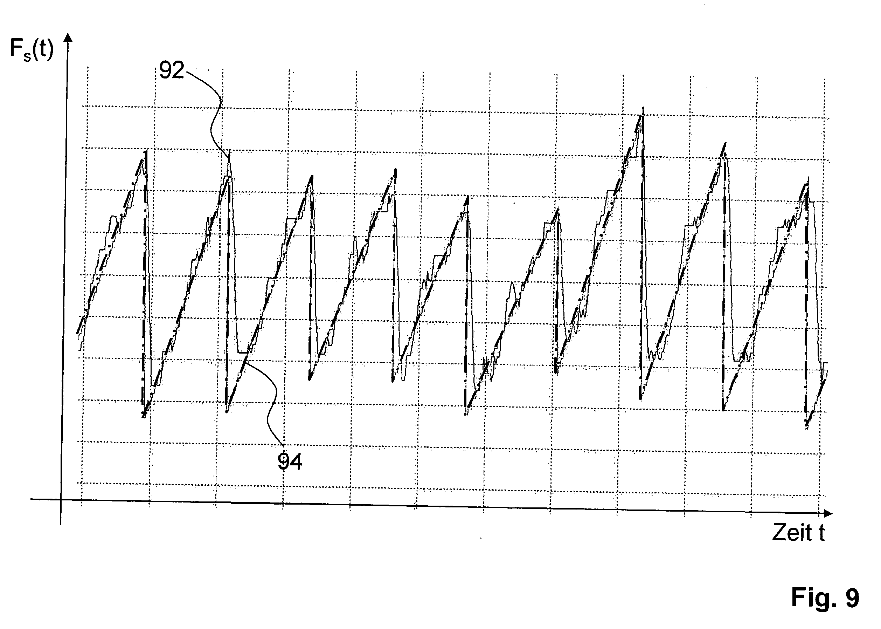

Es hat sich gezeigt, dass in der Praxis aufgrund von Störeinflüssen, bedingt durch kurzzeitige Spannungspitzen der Einzelfäden auf der Tastfläche 80, ein verfrühtes oder verzögertes Abrutschen eines Einzelfadens von der Tastflanke 80 über die Abwurfflanke 81, durch Schwingungen des Messarms 84 oder ähnliche Störungen, das Messergebnis verfälscht werden kann. Insbesondere äußert sich der Abwurf des Einzelfadens durch die räumliche Ausdehnung des Einzelfadens, die Trägheit des Sensors, eine elektronische Signalverzögerung etc. nicht durch einen senkrechten Signalabfall, sondern durch eine verrundete Signalflanke begrenzter Steilheit. Um derartige Störeinflüsse auszugleichen, wird bei der erfindungsgemäßen Vorrichtung, wie in Figur 9 gezeigt, aus dem tatsächlichen Messergebnis der kumulierten Kraft $F_s$, dessen Verlauf in Figur 9 mit unregelmäßigen Linie 92 wiedergegeben, ein idealisierter Verlauf dadurch bestimmt, dass durch die Flanken des Verlaufs 92 jeweils Regressionsgeraden gelegt werden. Daraus ergibt sich eine Regressionskurve in Form eines unregelmäßigen Sägezahnprofils 94, das mit strichpunktierten Linien in Figur 9 gezeigt ist. Durch die Bestimmung eines derartig idealisierten Verlaufs anhand von Regressionsgeraden wird der jeweilige Spannungssprung beim Abwurf eines Einzelfadens f über die Abwurfflanke 81 idealisiert. Der Zeitpunkt des idealisierten Sprungs kann nach verschiedenen Kriterien bestimmt werden, beispielsweise nach Überschreiten des höchsten Punktes in der Kurve 92 oder nach Überschreiten eines bestimmten Mindestkraftabfalls.

Durch die Idealisierung des Verlaufs der auf den Messtaster 66 ausgeübten kumulierten Kraft $F_s$ mittels Regressionsgeraden können kürzere Schwankungen der Fadenspannung ausgeglichen werden. Länger dauernde Schwankungen lassen sich dagegen insbesondere anhand mehrerer Messdurchgänge der gesamten Fadenschar ausgleichen.

Die Messergebnisse lassen sich auf unterschiedliche Art und Weise verwerten. So ist es möglich, nach einem Messdurchlauf, bei dem sich der Messschlitten 12 quer über die gesamte Fadenschar F (siehe Figur 1) bewegt hat, zu überprüfen, ob sämtliche Einzelfäden f1, f2, f3 bis fn innerhalb eines Toleranzbereichs der Fadenspannung $F_L$ lagen, oder ob einige Fäden außerhalb dieses Toleranzbereichs liegen. Ferner lässt sich bestimmen, ob bestimmte Soll-Positionen, an denen Fäden zu erwarten sind, ohne Messergebnis für einen Einzelfaden blieben, was möglicherweise auf einen gerissenen Faden oder einen im Wesentlichen spannungsfreien Faden hindeutet. Je nach Messergebnis, beispielsweise je nach Feststellung einer Fehlstelle, kann dann die Vorrichtung 10 entsprechende Maßnahmen ergreifen, beispielsweise die Ausgabe eines Alarmsignals.

Es ist aber auch möglich, Langzeitmessungen durchzuführen, beispielsweise dahingehend, dass bei einer einmaligen Messung festgestellte Fehlstellen in wenigstens einem folgenden Durchlauf erneut überprüft werden und erst nach einer mehrmaligen Erfassung ein und der selben Fehlstelle an ein und der selben Soll-Position eines Einzelfadens, ein Alarmsignal auszugeben. Darüber hinaus können mit Langzeitmessungen verschiedenen Schwankungen in den Fadenspannungen der Einzelfäden ermittelt werden, beispielsweise dadurch, dass ein maximaler Spannungswert, ein minimaler Spannungswert und ein Mittelwert über beispielsweise zehn Messdurchläufe quer über die sich in Längsrichtung L bewegende Fadenschar F ermittelt werden.

Ferner lassen sich Kurzzeitmessungen und Langzeitmessungen archivieren, um so die Qualität eines Scherbaumes zu dokumentieren.

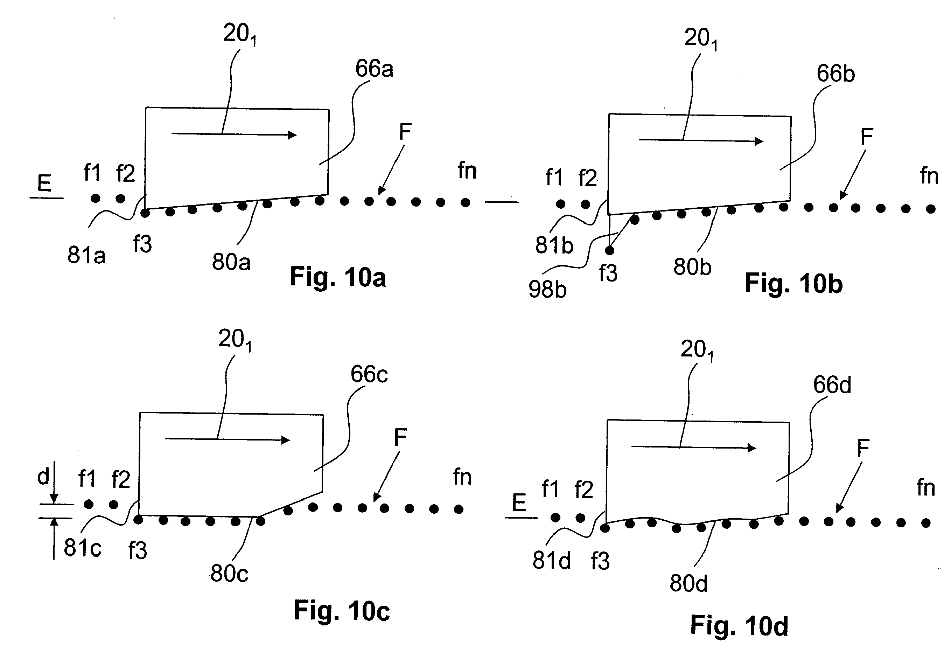

Figuren 10a, 10b, 10c und 10d zeigen verschiedene Möglichkeiten zur Ausgestaltung des Messtasters 66 hinsichtlich ihres Auslenkungsprofils, wobei die vorstehend angesprochenen Führungskufen nicht dargestellt sind.

Der Messtaster 66a ist beispielsweise an seiner Tastflanke 80a mit einer derartigen Schräge ausgebildet, dass die Einzelfäden f1, f2, f3, ... fn problemlos auf die Messflanke 80a ohne ein Verhaken oder dergleichen aufgleiten können und schließlich bei Erreichen der Abwurfflanke 81a abgleiten können. Die Ausführungsform gemäß Figur 10a entspricht im Wesentlichen der Ausführungsform, wie mit Bezug auf Figuren 6 und 7 beschrieben.

Alternativ zu der Ausführungsform gemäß Figur 10a ist in Figur 10b eine Ausführungsform gezeigt, bei der der Messtaster 66b wiederum an der Tastflanke 80b mit einer Schräge ausgebildet ist. An dem bezüglich der messaktiven Bewegungsrichtung $20_1$ hinteren Ende der Tastflanke 80b ist jedoch eine steil verlaufende Messspitze 98b vorgesehen, an die sich die Abwurfflanke 81b anschließt. Bei der Ausführungsform gemäß Figur 10b ist der Messtaster 66b derart ausgebildet, dass lediglich die Messspitze 98b messwirksam ist, so dass im Vergleich zur der Ausführungsform gemäß Figur 10a, bei der die gesamte Tastflanke 80a messwirksam ist, eine geringere Anzahl von Einzelfäden - im gezeigten Fall nur 2 - zeitgleich erfasst wird.

Bei der Ausführungsform gemäß Figur 10c weist der Messtaster 66c eine bezüglich der messaktiven Bewegungsrichtung $20_1$ vorlaufende Auflaufflanke 110c auf, auf die die Einzelfäden f1, f2 usw. auflaufen, und bezüglich der von der Fadenschar F aufgespannten Ebene E um den Betrag d ausgelenkt werden. Schließlich erreichen die Einzelfäden die Tastflanke 80c, welche messaktiv ist. Dies bedeutet, dass alle Einzelfäden, die an der Messflanke c anliegen, zur Erfassung der kumulierten Kraft $F_s$ beitragen. Sobald die Einzelfäden die Abwurfflanke 81c erreichen, kommt es wiederum zu einem Sprung im Verlauf der kumulierten Messtasterkraft.

Figur 10d zeigt einen kurvenförmigen Verlauf der Tastflanke 80d, der derart ausgebildet ist, dass an dem hinsichtlich der messaktiven Bewegungsrichtung $20_1$ vorlaufenden Bereich des Messtasters 66d ein hindernisfreies Aufgleiten der Einzelfäden f auf die Tastflanke 80d möglich ist. In der Folge werden die Einzelfäden f in Abhängigkeit von ihrer aktuellen Position auf der Tastflanke 80d ausgelenkt. Da die erfindungsgemäße Vorrichtung die augenblickliche Position des Messschlittens 12 und damit des Messtasters 66d erfasst und darüber hinaus auch, wie vorstehend bereits dargelegt, die Positionen der Einzelfäden erfasst, kann unter Berücksichtigung des bekannten Verlaufs der Tastflanke 80d aus der erfassten kumulierten Spannung $F_s$, insbesondere wiederum aus den jeweiligen Kraftsprüngen, die beim Abgleiten von Einzelfäden über die Abwurfflanke 81d auftreten, auf die Fadenspannung im jeweiligen Einzelfaden geschlossen werden. Es gilt die allgemeine Beziehung

$$F_S(t) = c \cdot \sum_{i=1}^{n} (F_{fi}(x_i) \bullet d(x_i)),$$

wobei

Fs(t)  die kumulierte auf den Messtaster 66d ausgeübte Kraft angibt,

c  eine bekannte Konstante ist,

$F_{fi}(x_i)$  die von einem jeweiligen Einzelfaden fi an einer bestimmten Position $x_i$ der Tastflanke auf diese ausgeübte Kraft ist, wobei diese Kraft durch das Niveau an dieser Position $x_i$ der Tastflanke bestimmt ist.

$d(x_i)$  die von der Tastfläche auf den Einzelfaden $f_i$ verursachte Auslenkung ist, wenn der Einzelfaden fi sich am Ort $x_i$ befindet.

$x_i$  der Ort des jeweiligen Einzelfadens auf der Tastflanke in Abhängigkeit von der Zeit t ist.

Mathematisch ergibt sich die vom Sensor erfasste Kraft als Faltung des Auslenkungsprofils des Sensors $d(x_i)$ mit der von der Fadennummer i abhängigen Fadenspannung. Im allgemeinen Fall eines beliebigen Auslenkungsprofils kann damit durch Lösen des obigen Gleichungssystems, speziell durch die in der Mathematik bekannten Verfahren der Entfaltung, vorzugsweise durch Korrelationsanalyse, vom Sensorsignal auf die Spannung der Einzelfäden zurückgerechnet werden. Bei einer bevorzugten Ausführungsform kann das Profil der Tastflanke in Form einer pseudostatistischen Folge gestaltet werden.

Die Erfindung zeigt eine Möglichkeit, zur zuverlässigen Bestimmung von Einzelfadenspannungen innerhalb kurzer Zeitdauer mit hoher Genauigkeit und geringen Messfehlern.

**Patentansprüche**

1. Vorrichtung (10) zum Erfassen der Fadenspannung wenigstens eines Einzelfadens (f) einer Fadenschar (F) in der Textilverarbeitung, wobei die Fadenschar (F) eine Mehrzahl von im Wesentlichen parallel zueinander geführten Einzelfäden (f1, f2, ...fn) aufweist, wobei die Vorrichtung (10) einen Messschlitten (12) aufweist, der quer zur Fadenschar (F) in einer messaktiven Bewegungsrichtung ($20_1$) bewegbar ist, wobei weiter der Messschlitten (12) einen Messtaster (66) aufweist, der bei der Bewegung des Messschlittens (12) in der messaktiven Bewegungsrichtung ($20_1$) mit dem wenigstens einen Einzelfaden (f) zur Bestimmung der Fadenspannung in Wechselwirkung tritt und nach Maßgabe der Wechselwirkung ein Sensorsignal erzeugt, **dadurch gekennzeichnet, dass** der Messtaster (66) ein Auslenkungsprofil aufweist, das an dem wenigstens einen Einzelfaden (f1, f2, f3...,fn) zur Bestimmung der Fadenspannung angreift, wobei die Vorrichtung (10) den zeitlichen Verlauf des Sensorsignals erfasst, und anhand des zeitlichen Verlaufs des Sensorsignals unter Berücksichtigung der Geometrie des Auslenkungsprofils die Fadenspannung des wenigstens einen Einzelfadens (f1, f2, f3...,fn) bestimmt.

2. Vorrichtung (10) nach Anspruch 1, **gekennzeichnet durch** wenigstens eine mit dem Messschlitten (12) verbundene Führungskufe (68, 70), die den wenigstens einen Einzelfaden (f) auf einer Seite des Messtasters (66) in eine vorbestimmte Lage bezüglich des Messtasters (66) bringt, vorzugsweise den wenigstens einen Einzelfaden (f) auf einer Seite des Messtasters (66) um einen vorbestimmten Abstand aus einer von den Einzelfäden (f1, f2, ... fn) der Fadenschar (F) definierten Ebene (E) auslenkt.

3. Vorrichtung (10) nach Anspruch 2, **gekennzeichnet durch** ein Führungskufenpaar, dessen Führungskufen (68, 70) beidseits des Messtasters (66) angeordnet sind und den wenigstens einen Einzelfaden (f) beidseits des Messtasters (66) in eine vorbestimmte Lage bezüglich des Messtasters (66) bringen, vorzugsweise den wenigstens einen Einzelfaden (f) beidseits des Messtasters (66) um einen vorbestimmten Abstand aus einer von den Einzelfäden (f1, f2, ... fn) der Fadenschar (F) definierten Ebene auslenken.

4. Vorrichtung (10) nach einem der vorangehenden Ansprüche,
**dadurch gekennzeichnet, dass** der Messtaster (66) an seinem Auslenkungsprofil eine bezüglich der messaktiven Bewegungsrichtung (201) vorlaufende Tastflanke (80) mit einer Tastflankensteigung und eine bezüglich der messaktiven Bewegungsrichtung (201) nachlaufende Abwurfflanke (81) mit einer Abwurfflankensteigung aufweist, wobei der Absolutwert der Abwurfflankensteigung vorzugsweise größer als der der Tastflankensteigung ist.

5. Vorrichtung (10) nach Anspruch 4,
**dadurch gekennzeichnet, dass** die Vorrichtung anhand eines beim Übergang eines Einzelfadens (f1, f2, f3, ...fn) von der Tastflanke (80) auf die Abwurfflanke (81) am Messtaster (66) auftretenden Fadenspannungsabfalls ($\Delta F1$, $\Delta F2$, $\Delta F3$,...) auf die Fadenspannung des jeweiligen Einzelfadens (f1, f2, f3, ...fn) schließt.

6. Vorrichtung (10) nach einem der vorangehenden Ansprüche, insbesondere nach Anspruch 5,
**dadurch gekennzeichnet, dass** eine Mehrzahl von Einzelfäden (f1, f2, ... fn) gleichzeitig mit dem Messtaster (66) in Wechselwirkung tritt, wobei die Fadenspannung eines Einzelfadens (f) aus dem zeitlichen Verlauf des die Fadenspannung aller Einzelfäden repräsentierenden Sensorsignals, insbesondere beim Übergang des Einzelfadens (f1, f2, f3, ...fn) von der Tastflanke (80) auf die Abwurfflanke (81), bestimmt wird.

7. Vorrichtung (10) nach Anspruch 6,
**dadurch gekennzeichnet, dass** aus den mit dem Messtaster (66) ermittelten Messwerten jeweils eine Regressionskurve ermittelt wird, wobei die Fadenspannung eines Einzelfadens (f) relativ zu dem nächstfolgenden Einzelfaden (f) der Fadenschar (F) aus dem Verlauf, insbesondere einem Sprung, der ermittelten Regressionskurven ermittelt wird.

8. Vorrichtung (10) nach Anspruch 7 oder 8,
**dadurch gekennzeichnet, dass** die Fadenspanung eines Einzelfadens aus der zeitlichen Analyse des Sensorsignals durch Lösen eines Gleichungssystems, insbesondere mittels mathematischer Entfaltung, vorzugsweise mittels einer Korrelationsanalyse, berechnet wird.

9. Vorrichtung (10) nach einem der vorangehenden Ansprüche,
**dadurch gekennzeichnet, dass** der Messtaster (66) nach Maßgabe der Fadenspannung auslenkbar, vorzugsweise elastisch deformierbar, ist, wobei der Messtaster (66) vorzugsweise einen federnd angelenkten freitragenden Tastarm (84) aufweist, der das Auslenkungsprofil (80) trägt.

10. Vorrichtung (10) nach Anspruch 9,
**gekennzeichnet durch** einen Deformationssensor (88), insbesondere einen Dehnmessstreifen zur Bestimmung der Deformation des Messtasters (66).

11. Vorrichtung (10) nach einem der vorangehenden Ansprüche, **dadurch gekennzeichnet, dass** das Auslenkungsprofil (80) und gegebenenfalls die dem wenigstens einen Faden zugewandte Fläche der wenigstens einen Führungskufe (68, 70) mit einer reibungsmindernden oder/und verschleißarmen Beschichtung, vorzugsweise einer Keramikbeschichtung, versehen ist.

12. Vorrichtung (10) nach einem der vorangehenden Ansprüche,
**gekennzeichnet durch** wenigstens einen quer zur Längsrichtung (L) der Fadenschar (F) verlaufenden Überlaufstab (14, 16, 18), auf dem die Fadenschar (F) geführt ist.

13. Vorrichtung (10) nach Anspruch 12,
**dadurch gekennzeichnet, dass** sich der Messschlitten entlang einer Bewegungsbahn zwischen zwei Überlaufstabpaaren im Wesentlichen parallel zu diesen bewegt, wobei die Fadenschar bei jedem Überlaufstabpaar jeweils oberhalb des jeweils einen Überlaufstabs und unterhalb des jeweils anderen Überlaufstabs geführt ist und zumindest einen Überlaufstab über einen minimalen Umschlingungswinkel, vorzugsweise über einen Umschlingungswinkel von höchstens 25°, weiter bevorzugt von höchstens 10°, umschlingt.

14. Vorrichtung (10) nach einem der vorangehenden Ansprüche,
**gekennzeichnet durch** eine Führungsanordnung, auf der der Messschlitten geführt ist, wobei vorzugsweise wenigstens einer der Überlaufstäbe (14, 16, 18) als Führungselement der Führungsanordnung nutzbar ist.

15. Vorrichtung (10) nach einem der vorangehenden Ansprüche,
**dadurch gekennzeichnet, dass** der Messschlitten (12) einen motorischen Antrieb aufweist, der eine Bewegung in und entgegen einer messaktiven Bewegungsrichtung ($20_1$) zulässt.

**16.** Vorrichtung (10) nach einem der vorangehenden Ansprüche,
**dadurch gekennzeichnet, dass** sich die Fadenschar (F) in deren Längsrichtung (L) in einer Fadenlaufrichtung bewegt.

**17.** Vorrichtung (10) nach einem der vorangehenden Ansprüche,
**gekennzeichnet durch** eine Erfassungseinrichtung, insbesondere **durch** eine optische Erfassungseinrichtung, vorzugsweise eine Transmissionslichtschranke, zur Erfassung der Position des wenigstens einen Einzelfadens **durch** Abtastung des Fadens oder des Fadenrichtorgans.

**18.** Vorrichtung (10) nach einem der vorangehenden Ansprüche,
**dadurch gekennzeichnet, dass** eine elektronische Steuereinrichtung anhand bereits spannungsvermessener Einzelfäden (f1, f2, ... fn), insbesondere anhand von bereits erfassten Positionen bereits spannungsvermessener Einzelfäden (f1, f2, ... fn), einen Bereich einer zu erwartenden Soll-Position zukünftiger Einzelfäden (f1, f2, ... fn) der Fadenschar (F) bestimmt und beim Erfassen von Einzelfäden (f1, f2, ... fn) diese den ermittelten Soll-Positionen zuordnet.

**19.** Vorrichtung (10) nach Anspruch 18,
**dadurch gekennzeichnet, dass** sie im Bereich von zu erwartenden Soll-Positionen Störsignale ausblendet, insbesondere nach Maßgabe der Amplituden der Messwerte oder/und der Abweichungen von der Soll-Position.

**20.** Vorrichtung (10) nach Anspruch 18 oder 19,
**dadurch gekennzeichnet, dass** die Steuereinrichtung über den Messtaster (66) erhaltene Messwerte bereits spannungsvermessener Einzelfäden (f1, f2, ... fn) jeweiligen vorbestimmten Soll-Positionen zuordnet und bei Ausbleiben eines Messwertes an einer Soll-Position eines zu erwartenden Einzelfadens (f) diese Soll-Position als mögliche Fehlstelle registriert.

**21.** Vorrichtung (10) nach Anspruch 18 oder 19,
**dadurch gekennzeichnet, dass** die Steuereinrichtung über den Messtaster (66) erhaltene Messwerte bereits spannungsvermessener Einzelfäden (f1, f2, ... fn) mit einem Soll-Fadenspannungsbereich vergleicht und dann, wenn ein Messwert eines spannungsvermessenen Einzelfadens (f) außerhalb des Soll-Fadenspannungsbereichs liegt, die zugehörige Soll-Position als mögliche Fehlstelle registriert.

**22.** Vorrichtung (10) nach einem der vorangehenden Ansprüche,
**dadurch gekennzeichnet, dass** die Steuereinrichtung eine Mehrzahl von, vorzugsweise 5, jeweils an wenigstens einer Soll-Position, vorzugsweise jeweils an mehreren Soll-Positionen, erhaltener Messwerte zwischenspeichert und daraus für die jeweilige Soll-Position einen Fadenspannungsbereich nach Maßgabe eines Fadenspannungs-Maximums sowie Fadenspannungs-Minimums oder/und einen Fadenspannungs-Mittelwert ermittelt.

**23.** Textile Produktionsanlage, umfassend:

ein Gatter, insbesondere ein Spulengatter,

- ein Riet, insbesondere ein Ösenriet,
- ggf. einen Schlichtetrog,
- ggf. einen Trockner sowie
- einen Schärkopf oder eine Spulenwickeleinrichtung,

wobei eine Fadenschar (F) von dem Gatter abläuft, durch das Riet geführt ist und ggf. den Schlichtetrog sowie den Trockner durchläuft, bis die Fadenschar (F) an dem Schärkopf oder der Spulenwickeleinrichtung aufgewickelt wird,
**gekennzeichnet durch** eine Vorrichtung (10) nach einem der vorangehenden Ansprüche, die vorzugsweise zwischen dem Riet und dem Schlichtetrog angeordnet ist.

**24.** Produktionsanlage nach Anspruch 23,
**dadurch gekennzeichnet, dass** das Gatter oder/und die Spulenwickeleinrichtung nach Maßgabe der mit der Vorrichtung (10) nach einem der Ansprüche 1 bis 22 erfassten Fadenspannung der Einzelfäden (f1, f2, ... fn) der Fadenschar (F) ansteuerbar ist.

**25.** Messschlitten (12) für eine Vorrichtung (10) nach einem der Ansprüche 1 bis 22, der quer zur Fadenschar (F) in einer messaktiven Bewegungsrichtung $(20_1)$ bewegbar ist, wobei der Messschlitten (12) einen Messtaster (66) aufweist, der bei der Bewegung des Messschlittens (12) in der messaktiven Bewegungsrichtung $(20_1)$ mit dem wenigstens einem Einzelfaden (f) zur Bestimmung der Fadenspannung in Wechselwirkung tritt,
**dadurch gekennzeichnet, dass** der Messtaster (66) ein Auslenkungsprofil aufweist, das an dem wenigstens einen Einzelfaden zur Bestimmung der Fadenspannung angreift, wobei die Vorrichtung den zeitlichen Verlauf des Sensorsignals erfasst und anhand des zeitlichen Verlaufs des Sensorsignals unter Berücksichtigung der Geometrie des Auslenkungsprofils die Fadenspannung des wenigstens einen Einzelfadens bestimmt.

**26.** Verfahren zum Steuern einer Vorrichtung (10) zum Erfassen der Fadenspannung wenigstens eines Einzelfadens (f) einer Fadenschar (F) in der Textilverarbeitung, insbesondere einer Vorrichtung nach einem der Ansprüche 1 bis 22, wobei die Fadenschar (F) eine Mehrzahl von im Wesentlichen parallel zueinander geführten Einzelfäden (f1, f2, ...fn) aufweist, wobei die Vorrichtung (10) einen Messschlitten (12) aufweist, der quer zur Fadenschar (F) in einer messaktiven Bewegungsrichtung ($20_1$) bewegt wird, wobei weiter der Messschlitten (12) einen Messtaster (66) aufweist, der bei der Bewegung des Messschlittens (12) in der messaktiven Bewegungsrichtung ($20_1$) mit dem wenigstens einen Einzelfaden (f) zur Bestimmung der Fadenspannung in Wechselwirkung tritt,

**dadurch gekennzeichnet, dass** der Messtaster (66) ein Auslenkungsprofil aufweist, das an dem wenigstens einen Einzelfaden zur Bestimmung der Fadenspannung angreift, wobei die Vorrichtung den zeitlichen Verlauf des Sensorsignals erfasst und anhand des zeitlichen Verlaufs des Sensorsignals unter Berücksichtigung der Geometrie des Auslenkungsprofils die Fadenspannung des wenigstens einen Einzelfadens bestimmt.

Fig. 1

EP 1 640 485 A2

Fig. 2

Fig. 3

Fig. 4

Fig. 5

72

20₁

66

90

82

86

S

89 87 88

80

$F_f$

76

84

81

**Fig. 6**

72

90

f4 f3 f2 f1

66

70

68

S

74

84

81

76 80

$F_{f4}$

$F_{f3}$

$F_{f2}$

$F_{f1}$

20₁

84

L

**Fig. 7**

Fig. 8

Fig. 9

Fig. 10a

Fig. 10b

Fig. 10c

Fig. 10d